(19) Europäisches Patentamt
European Patent Office
Office européen des brevets

(11) Veröffentlichungsnummer: **0 313 896 B1**

(12) **EUROPÄISCHE PATENTSCHRIFT**

(45) Veröffentlichungstag der Patentschrift: **27.11.91**

(51) Int. Cl.⁵: **B23K 31/00**, B23K 9/02, B21C 37/08, G02B 6/44

(21) Anmeldenummer: **88116606.0**

(22) Anmeldetag: **07.10.88**

(54) **Verfahren und Vorrichtung zur Herstellung eines Lichtwellenleiterkabels.**

(30) Priorität: **26.10.87 DE 3736123**

(43) Veröffentlichungstag der Anmeldung:
**03.05.89 Patentblatt 89/18**

(45) Bekanntmachung des Hinweises auf die
Patenterteilung:
**27.11.91 Patentblatt 91/48**

(84) Benannte Vertragsstaaten:
**AT BE CH DE ES FR GB GR IT LI NL SE**

(56) Entgegenhaltungen:
**EP-A- 115 441        DE-A- 2 743 260
FR-A- 1 493 788      FR-A- 2 083 600
GB-A- 1 576 798      US-A- 4 154 976**

(73) Patentinhaber: **kabelmetal electro GmbH
Kabelkamp 20 Postfach 260
W-3000 Hannover 1(DE)**

(72) Erfinder: **Ziemek, Gerhard, Dr.-Ing.
Bunzlauer Strasse 6
W-3012 Langenhagen(DE)**
Erfinder: **Staschewski, Harry,Ing.
Werlhofstrasse 23
W-3012 Langenhagen(DE)**
Erfinder: **Gunia, Ewald,Ing.
Wissmannstrasse 2
W-3000 Hannover(DE)**

**Beschreibung**

Die Erfindung betrifft ein Verfahren zur Herstellung eines Lichtwellenleiterkabels, bei dem ein Metallband mit einer Breite zwischen 15 und 80 mm und einer Wanddicke zwischen 0,2 und 2,5 mm, wobei das Verhältnis von Breite zu Wanddicke zwischen 15 und 50 liegt, kontinuierlich von einer Vorratsspule abgezogen, an seinen Längskanten besäumt und allmählich zum Schlitzrohr geformt wird, und in das noch offene Schlitzrohr die Lichtwellenleiter eingebracht werden, wobei in einer ersten aus Formrollen bestehenden Formstufe zunächst lediglich den Randbereichen des Metallbandes die Krümmung des herzustellenden Rohres erteilt wird, das Schlitzrohr längsnahtgeschweißt und das geschweißte Rohr durch eine an dem Rohr hinter der Schweißstelle angreifende Abzugsvorrichtung durch die Fertigungsanlage transportiert wird.

Für die Übertragung von Informationen mittels Lichtwellenleiter ist ein Lichtwellenleiterkabel bekannt geworden, welches aus einem längsnahtgeschweißten und gewellten Metallrohr besteht, in dem die Lichtwellenleiter angeordnet sind. Solche Kabel können in nahezu beliebigen Längen hergestellt werden. (DE-A1-27 43 260) Für die Verlegung unter Wasser ist dieses Kabel nicht geeignet, da der Wellmantel Drücken von über 100 bar in der Regel nicht standhalten kann.

Im Zusammenhang transozeanischer Übertragung von Informationen mittels Lichtwellenleiter ist deshalb ein neuer Kabeltyp erforderlich, bei dem einerseits die empfindlichen Lichtwellenleiter gegen Druck und Schwingungen geschützt sind und der in der Lage ist, große Strecken zu überbrücken. Da die in Lichtimpulse umgewandelten Informationen einer Dämpfung unterliegen, ist es erforderlich, in bestimmten Abständen Verstärker anzuordnen, welche die Lichtimpulse auffrischen. Diese Verstärker müssen mit Strom versorgt werden. Um diesen Aufgaben gerecht zu werden, bietet sich ein dickwandiges Rohr aus einem elektrisch gut leitfähigen Metall wie Kupfer oder Aluminium an. Das dickwandige Rohr schützt einerseits die Lichtwellenleiter gegen den äußeren Druck der in großen Meerestiefen bis zu 1000 bar betragen kann und bietet andererseits über die große Querschnittsfläche die Möglichkeit, die Verstärker mit Strom zu versorgen, ohne daß sich der Rohrquerschnitt in unzulässiger Weise erhitzt, wodurch die Lichtwellenleiter beschädigt werden könnten.

Um dem hohen Druck widerstehen zu können, muß das die Lichtwellenleiter umgebende Rohr ein bestimmtes Verhältnis von Druckmesser zu Wanddicke haben. Solche Rohre können nur mit einem Schweißverfahren hergestellt werden, bei welchem die Lichtwellenleiter unmittelbar vor dem Schweißen in das Rohr eingelegt werden. Wegen der extrem hohen Druckbelastung wird man von vergleichsweise kleinen Rohrdurchmessern ausgehen, zumal große Längen von mehreren Kilometer in einem Stück gefordert werden, um Spleißstellen am Kabel zu vermeiden. Aus den genannten Gründen bieten sich Rohre an, deren Außendurchmesser zwischen 5 und 10 mm und deren entsprechende Wanddicke 0,2 bis 1,0 mm beträgt.

Die kontinuierliche Herstellung von Rohren mit diesen Abmessungen bereitet große Schwierigkeiten. Gegenüber den bei dünnwandigen Rohren auftretenden Kräften, welche von der Abzugsvorrichtung aufgebracht werden müssen, sind die Kräfte extrem höher. Zunächst wird das Band durch ein organisches Lösungsmittel gereinigt und anschließend an seinen Bandkanten besäumt, damit der Rohrdurchmesser exakt eingestellt werden kann und damit beim Schweißen oxidfreie Bandkanten vorliegen. Anschließend daran wird das Band in mehreren Formstufen zum Schlitzrohr geformt. Es ist leicht vorstellbar, daß sowohl die für das Besäumen als auch für das Rohrformen aufzubringenden Kräfte bei dickwandigen Rohren wesentlich größer sind als bei dünnwandigen Rohren.

Bei einem Rohr mit gleichzeitig kleinen Durchmesser reicht der Rohrquerschnitt nicht aus, um diese hohen Kräfte zu übertragen. Die Folge ist, das Rohr reißt ab. Erschwerend kommt noch hinzu, daß sich das Rohr wegen des geringen Durchmessers beim Schweißen über den gesamten Umfang erhitzt, so daß im Schweißpunkt das Rohr erheblich an Zugfestigkeit verliert.

Da wegen der sehr hohen Wanddicke hohe Stromstärken für die Verschweißung erforderlich sind, ist in extremen Fällen der gesamte Querschnitt des Rohres auf Rotglut erhitzt. Durch die große Hitze würden die innerhalb des Rohres befindlichen Lichtwellenleiter in Mitleidenschaft gezogen werden. Die Herstellung derartiger dickwandiger Rohre zur Aufnahme von Lichtwellenleitern ist in der EP-A2-0 115 441 ausführlich beschrieben.

Aus der EP-A1-0 136 276 ist es bei der Herstellung von Schweißelektroden bekannt, Metallbänder mit einer bestimmten Bandbreite und Wanddicke einzusetzen. Das Problem, die Erwärmung der Schweißstelle möglichst niedrig zu halten, wird dort dadurch gelöst, daß eine hohe Schweißgeschwindigkeit und gleichzeitig eine geringe Schweißenergie angestrebt wird. Dies sind aber Maßnahmen, die bei der Verschweißung von dickwandigen Rohren nicht einsetzbar sind.

Aus der US-A1-4 154 876 ist es bekannt, die Hitze in der Schweißnaht durch Besprühen mit einem Schmiermittel zu verteilen. Hierbei ist jedoch zu beachten, daß die Schweißnaht schon ziemlich stark abgekühlt sein muß, da sonst Blasen im Gefüge der Schweißnaht bedingt durch Flüssigkeitstropfen auftreten.

Der vorliegenden Erfindung liegt von daher die Aufgabe zugrunde, ein Verfahren anzugeben, mit dem dickwandige Rohre mit kleinem Durchmesser in kontinuierlicher Arbeitsweise durch Formen eines Metallbandes zum Schlitzrohr und anschließendes Verschweißen der Längsnaht problemlos hergestellt werden können. Insbesondere sollen Rohre mit einem Durchmesser von weniger als 15 mm und einer Wanddicke von mehr als 0,3 mm hergestellt werden können. Eine Beeinträchtigung von in dem Rohr ggfs. befindlichen elektrischen oder optischen Leitern durch die Schweißwärme soll vermieden werden.

Diese Aufgabe wird durch die Kombination folgender Merkmale gelöst:

a) Das Metallband wird vor der Schweißstelle regelbar angetrieben.

b) Das Rohr gelangt unmittelbar hinter der Schweißstelle mit mindestens 60 % seiner Umfangsfläche in einen mit Kühlmittel gefüllten Behälter.

Durch das Antreiben des bezüglich seiner Breite extrem dickwandigen Metallbandes wird ein Großteil der vor der Schweißstelle aufzubringenden Kräfte bereits vor der Schweißstelle aufgefangen bzw. ausgeglichen.

Da das Rohr im Bereich der Schweißstelle intensiv gekühlt wird, beschränkt sich der infolge der aufgebrachten Schweißenergie erhitzte Wandungsbereich des Rohres lediglich auf die Schweißnaht. Vorteilhafterweise werden zumindest 80 % der Umfangsfläche des Rohres gekühlt. Die Schweißnaht darf nicht direkt mit Kühlmittel gekühlt werden, da dann die Gefahr von Schweißfehlern z. B. in Form von Gasblasen in der Schweißnaht besteht. Das Kühlen kann mit besonderem Vorteil durch Führen des Rohres durch ein Wasserbad vorgenommen werden.

Damit nicht ein zusätzliches Antriebsaggregat vor der Schweißstelle erforderlich wird, wird das Band nach einer besonders vorteilhaften Ausgestaltung der Erfindung während des Besäumens angetrieben. Da für das Besäumen sogenannte Rollenscheren verwendet werden, ist ein Antrieb für eine solche Rollenschere besonders einfach durchführbar. Dabei können entweder nur eine der Rollen oder auch beide Rollen der Rollenschere angetrieben werden.

Gerade bei dickwandigen Metallbändern ist es unbedingt erforderlich, daß im Zuge der Verformung des Bandes zum Rohr zunächst die Randbereiche des Metallbandes geformt werden, damit eine Parallelität der zu verschweißenden Stirnflächen des Metallbandes gewährleistet ist. Für diese Formung verwendet man zweckmäßigerweise Formrollen. In Weiterführung der Erfindung hat es sich als sinnvoll erwiesen, zumindest eine der Formrollen anzutreiben.

Um die Leistung der Anlage zu erhöhen, ist es von Vorteil, wenn das Rohr nach dem Schweißen noch gezogen wird, d. h. in seinen Durchmesser verringert wird. Bei einem gleichen Verhältnis von Durchmesser/Wanddicke des Rohres kann von einer größeren Bandbreite ausgegangen werden.

Die Erfindung betrifft ebenfalls eine Vorrichtung zur Durchführung des Verfahrens. Eine solche an sich bekannte Vorrichtung besteht aus einer Ablaufvorrichtung für das Metallband und die Lichtwellenleiter, einer Besäumungseinrichtung für das Band, einer das Band zum Rohr formenden aus mehreren Formstufen bestehenden Formeinrichtung, einer das Schlitzrohr verschweißenden Schweißeinrichtung sowie einer an dem geschweißten Rohr angreifenden Abzugsvorrichtung. Bei einer solchen Vorrichtung besteht gemäß der Erfindung die Besäumungsrichtung aus einer Rollenschere, wobei zumindest eine der Rollen durch einen regelbaren Gleichstrommotor angetrieben ist. Weiterhin ist zumindest die erste Formstufe ein Rollenwerkzeug, von denen zumindest eine der Rollen durch einen geregelten Gleichstrommotor angetrieben ist. Unmittelbar hinter der Schweißstelle ist ein Kühlmittelbehälter angeordnet, durch den das Rohr hindurchführbar ist, wobei der Kühlmittelstand so eingestellt ist, daß das Kühlmittel das Rohr um mindestens 60 % seines Umfangs umgibt.

Zur Anpassung an unterschiedliche Abmessungen des Rohres ist der Kühlmittelbehälter zweckmäßigerweise höhenverstellbar.

Der Kühlmittelbehälter weist einen Deckel auf, wobei am Deckel ein Anschluß für eine Saugpumpe angeordnet ist. Dadurch kann in dem Dampfraum oberhalb des Kühlmittels ein Unterdruck erzeugt werden, wodurch verhindert wird, daß Kühlmitteldampf zu der unmittelbar vor dem Kühlmittelbehälter angeordneten Schweißstelle gelangt. Zwischen der Schweißstelle und der Abzugsvorrichtung vorzugsweise zwischen dem Kühlmittelbehälter und der Abzugsvorrichtung ist ein Ziehring angeordnet, der wie vorher erwähnt, das Rohr in seinem Durchmesser reduziert.

Mit besonderem Vorteil ist die Schweißeinrichtung eine Wolfram-Inertgas-Schweißvorrichtung mit mindestens zwei Elektroden. Durch die Verwendung von mehreren Elektroden kann der Schweißstrom auf eine längere Schweißnaht verteilt werden.

Das erfindunggemäße Verfahren ist in besonders vorteilhafter Weise anwendbar zur Herstellung von optischen Kabeln mit einer Metallhülle, innerhalb der die empfindlichen Lichtwellenleiter angeordnet sind. Das Verhältnis von Durchmesser zu Wanddicke liegt dabei zwischen 5 und 30. Als Werkstoff wird ein elektrisch gut leitendes Metall wie Kupfer oder Aluminium sowie deren Legierungen eingesetzt.

Die Erfindung ist an Hand des in den Figuren I bis 6 schematisch dargestellten Ausführungsbeispiele näher erläutert.

Die Figur I zeigt eine seitliche Ansicht einer Vorrichtung, wie sie für das erfindungsgemäße Verfahren einsetzbar ist.

Von einem Bandablauf 1 wird ein Aluminiumband 2 von z. B. 25 mm Breite und einer Wanddikke von 1,1 mm abgezogen. In einer Bandwäsche 3 wird das Band 2 entfettet und gereinigt. In einer Besäumungseinrichtung 4 werden die Bandkanten geschnitten und zwar auf eine Bandbreite von 21 mm. Damit ist gewähleistet, daß der Durchmesser des Schlitzrohres stets gleich ist. Darüberhinaus stehen der Schweißeinrichtung oxidfreie Oberflächen zur Verfügung. Hinter der Besäumungseinrichtung 4 wird das Band 2 in einer Formeinrichtung 5 in mehreren Stufen zu einem Schlitzrohr 6 geformt. Die erste Formstufe 7 ist ein Rollenwerkzeug - wie weiter unten beschrieben - wogegen die nachfolgenden Formstufen konusartig geformte Rohre und dahinter angeordnete Ringe sind. Vor der ersten Formstufe 7 werden Lichtwellenleiter 8 in das noch offene Schlitzrohr eingelegt.

Hinter der Formeinrichtung 5 befindet sich die Schweißvorrichtung 9, die zweckmäßigerweise eine Wolfram-Inertgas-Schweißvorrichtung ist.

Das geschweißte Rohr 10 wird unmittelbar hinter der Schweißeinrichtung in einen Wasserbehälter 11 eingeführt, wo es gekühlt wird. Nach dem Kühlen kann das Rohr 10 durch einen Ziehring 12 hindurchgezogen werden, der den Außendurchmesser des geschweißten Rohres 10 reduziert. Als Abzugsvorrichtung dient zweckmäßigerweise ein sogenannter Spannzangenabzug 13, welcher aus einer Vielzahl von das Rohr 10 fassenden und wieder freigebenden Spannzangenpaaren besteht, die an einer endlosen angetriebenen Kette befestigt sind. Das fertige Produkt kann dann auf eine Vorratsspule 14 aufgewickelt werden. Eine solche Vorrichtung mit Ausnahme der Kühleinrichtung 11 ist an sich bekannt. Bei dieser bekannten Ausführung wird das Aluminiumband 2 bzw. das geschweißte Rohr allein durch die vom Spannzangenabzug 13 aufgebrachten Kräfte durch die Anlage gezogen.

Bei dickwandigen und einen geringen Durchmesser aufweisenden Rohren ist diese Vorrichtung ohne entscheidende Änderungen nicht einsetzbar, da die Verformungskräfte bei dickwandigen Bändern so hoch sind, daß der geringe Querschnitt eines so definierten Rohres nicht ausreicht, die vor der Schweißstelle 9 auftretenden Kräfte zu übertragen. Das Rohr reißt ab.

Die erfindungsgemäße Vorrichtung unterscheidet sich von der bekannten dadurch, daß die Besäumungseinrichtung 4 sowie die erste Formstufe 7 angetrieben ist. Dadurch wird dem Metallband 2 vor der Schweißstelle 9 ein Vorschub erteilt, der ein Großteil der Kräfte auffängt. Zusätzlich sorgt die Kühleinrichtung 11 dafür, daß nicht der gesamte Querschnitt des Rohres durch den zugeführten Schweißstrom erhitzt wird, sondern sich die Erhitzung auf den Bereich der Schweißnaht beschränkt.

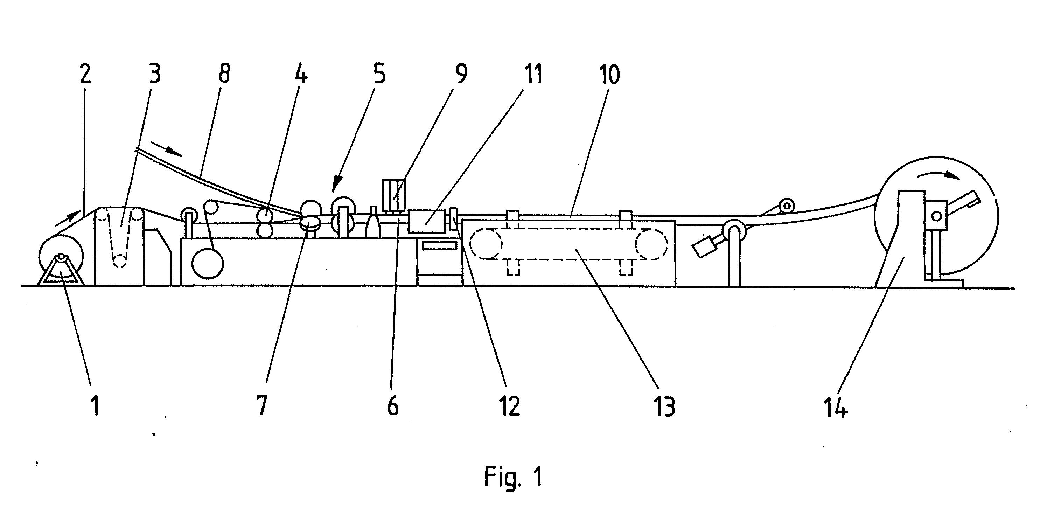

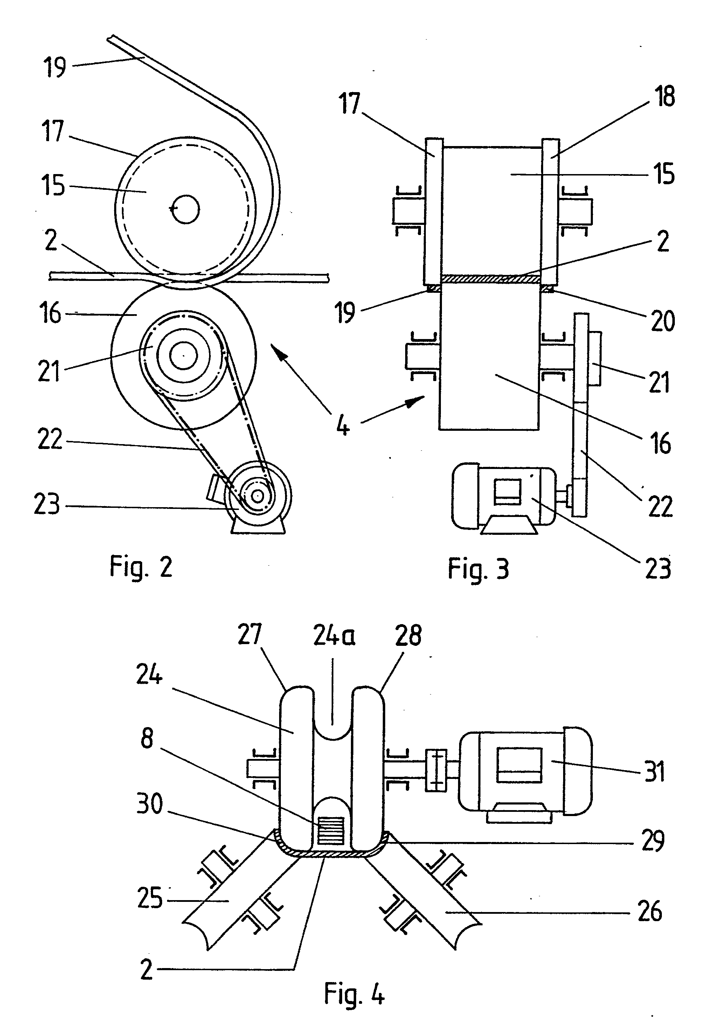

Die Figuren 2 bis 5 zeigen die Veränderungen.

In der Figur 2 ist die Besäumungseinrichtung 4 in seitlicher Ansicht dargestellt, welche aus zwei Rollen 15 und 16 besteht, zwischen denen das Aluminiumband 2 hindurchgeführt wird. Die Rolle 15 besitzt zwei Schneidkanten 17 und 18, welche von dem Band 2 Seitenstreifen 19 und 20 abscheren, welche in an sich bekannter Weise aufgewikkelt werden. Die Rolle 16 besitzt an einer ihrer Seiten eine Zahnriemenscheibe 21. Über die Zahnriemenscheibe 21 und einen Zahnriemen 22 ist die Rolle 16 von einem geregelten Gleichstrommotor 23 angetrieben. Die Figur 3 zeigt eine Ansicht der Besäumungseinrichtung 4 in Richtung des Verlaufes des Metallbandes. Die Figur 4 zeigt die erste Formstufe 7 in Richtung des Bandes 2 gesehen. Diese Formstufe besteht aus einer Kalibrierrolle 24 sowie zwei Stützrollen 25 und 26. Die Kalibrierrolle 24 besitzt im Querschnitt gesehen an ihren Enden gekrümmte Bereiche 27 und 28, deren Krümmungsradius dem Krümmungsradius des geweißten Rohres 10 nahezu entspricht. Die Mantelfläche der Stützrollen 25 und 26 ist entsprechend gekrümmt ausgebildet.Eine Ausnehmung 24a in der Mitte der Umfangsfläche der Kalibrierrolle 24 ermöglicht das Einlegen der Lichtwellenleiter 8 vor der Verformungsvorrichtung 5. Beim Duchgang des Metallbandes 2 durch die erste Formstufe verleihen die Kalibrierrolle 24 und die Stützrollen 25 und 26 den Randbereichen 29 und 30 des Metallbandes 2 die gewünschte Krümmung. Beim Schweißen liegen die geschnittenen Randflächen des Metallbandes 2 parallel zueinander, d. h. berühren sich auf ihrer gesamten Fläche. Bei extrem dicken Metallbändern wird dieser Optimalzustand nicht zu erreichen sein. Man behilft sich dann damit, daß man die Bandkanten hinter der Besäumungseinrichtung 4 in nicht dargestellter Weise anschrägt.

Da die Verformung der Kantenbereiche 29 und 30 bei dickwandigen Bändern zu Krümmungen mit geringem Krümmungsradius hohe Kräfte erfordern, wird die Kalibrierrolle 24 durch einen geregelten Gleichstrommotor 31 geregelt angetrieben. Die Regelung der Motoren 23 und 31 geschieht über die Antriebsgeschwindigkeit des Spannzangenabzuges. Durch eine Feinstregelung wird erreicht, daß keine Relativbewengung zwischen den angetriebenen Rollen 15 bzw. 24 und dem Metallband 2 auftritt.

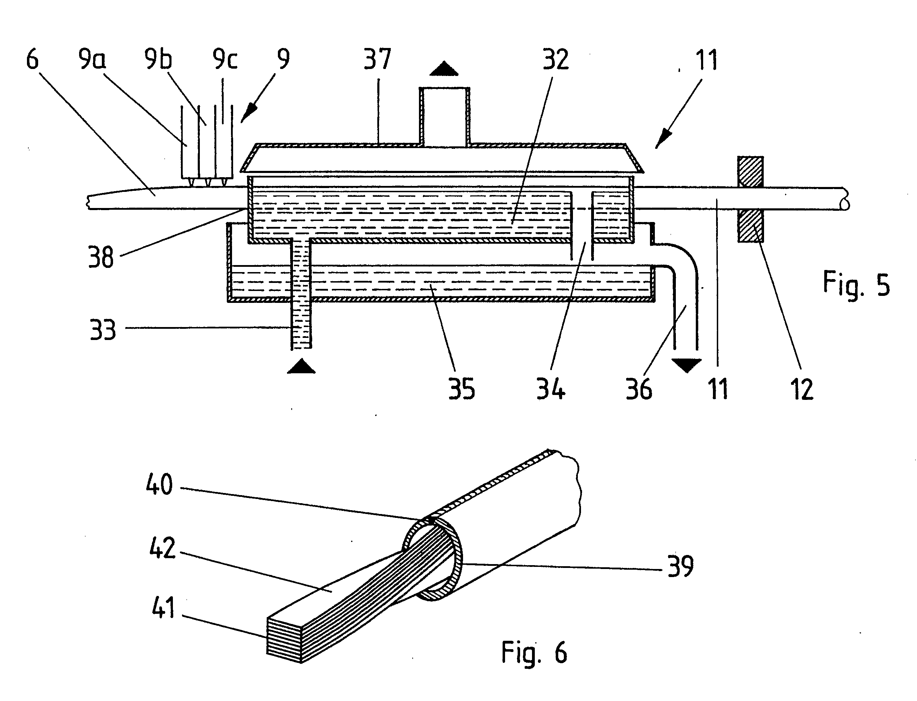

Figur 5 zeigt die Schweißvorrichtung 9 sowie die nachgeschaltete Kühlvorrichtung 11.

Als Schweißvorrichtung wird mit besonderem Vorteil ein Wolfram-Inertgas-Schweißbrenner mit drei hintereinander angeordneten Elektroden 9a, 9b und 9c verwendet. Eine solche Elektrodenanordnung verteilt die für die Verschweißung großer Wanddicken erforderliche hohe Stromstärke auf drei Elektroden, so daß ein längliches Schweißbad entsteht. Das geschweißte Rohr 10 gelangt dann in einen Wasserbehälter 32, der mit einem Zulauf 33 für Frischwasser und mit einem Überlauf 34 für das erwärmte Kühlwasser versehen ist. Das durch den Überlauf 34 fließende Kühlwasser gelangt in einen weiteren Kühlbehälter 35, aus dem es je nach Temperatur in den Behälter 32 zurück oder über einen Überlauf 36 abfließt. Im Deckel des Behälters 32 befindet sich ein Rohranschluß 37, an den eine nicht dargestellte Pumpe angeschlossen ist, welche oberhalb des Kühlmittels in dem Behälter 32 einen leichten Unterdruck erzeugt. Dadurch wird vermieden, daß Wasserdampf aus der Eintrittsöffnung 38 in den Bereich der Elektroden 9a, 9b, 9c gelangen kann.

Wesentlich für die Kühlung des Rohres 10 ist, daß ein möglichst großer Umfangsbereich des Rohres mit dem Kühlwasser in Berührung gelangt, wobei jedoch darauf geachtet werden muß, daß die Schweißnaht von Kühlwasser freibleibt. Um eine exakte Einstellung des Kühlwasserspiegels zu ermöglichen, ist der Behälter 32 höhenverstellbar. Alternativ kann auch der Überlauf 34 höhenverstellbar ausgebildet sein.

Wesentlich ist ferner, daß der Wasserbehälter 32 möglichst nahe an der Elektrode 9c angeordnet ist, damit das Rohr 10 im Bereich der Elektroden 9a - 9c optimal gekühlt wird. Der Wasserstand ist so eingestellt, daß vorzugsweise zumindest 80 % Umfangsfläche des Rohres 10 von Kühlwasser umgeben sind.

Die Figur 6 zeigt einen elektrischen Leiter aus einem dickwandigen Rohr 39 mit Längsschweißnaht 40. Das Rohr 39 besteht aus Aluminium und hat bei einer Wanddicke von 0,8 mm einen Durchmesser von 8 mm. Innerhalb des Rohres 39 befinden sich eine Vielzahl von Lichtwellenleitern 41, die im gezeigten Ausführungsbeispiel auf einer Folie 42 nebeneinander angeordnet sind. Mehrere solcher Folien sind übereinander angeordnet, wobei diese Anordnung um ihre Längsachse tordiert ist, so daß sich die Lichtwellenleiter bei Erwärmung oder Abkühlung frei ausdehnen bzw. zusammenziehen können. Gerade für dieses Ausführungsbeispiel ist das erfindungsgemäße Verfahren von großem Vorteil, da eine übermäßige Erwärmung der Lichtwellenleiter 41 nicht zu befürchten ist. Bei einer solchen Ausführungsform hat das Rohr 39 neben den mechanischen Erfordernissen, wie hohe Druckfestigkeit, hohe Zugfestigkeit noch die Aufgabe, Verstärker für die Lichtimpulse mit Strom zu versorgen.

Auf das Rohr 39 können in nicht dargestellter Weise noch eine Armierung und ein Kunststoffmantel aufgebracht werden. Bei einem Koaxialkabel dient das Rohr 39 als Innenleiter und kann mit einer Kunststoffschicht und einen weiteren metallischen Außenleiter umgeben sein.

Die beschriebenen Kabel können in nahezu unendlichen Längen hergestellt werden und weisen eine solche Zugfestigkeit auf, daß sie ohne große Schwierigkeiten verlegt werden können.

**Patentansprüche**

1. Verfahren zur Herstellung eines Lichtwellenleiterkabels, bei dem ein Metallband (2) mit einer Breite zwischen 15 und 80 mm und einer Wanddicke zwischen 0,2 und 2,5 mm, wobei das Verhältnis von Breite zu Wanddicke zwischen 15 und 50 liegt, kontinuierlich von einer Vorratsspule (1) abgezogen, an seinen Längskanten besäumt und allmählich zum Schlitzrohr (6) geformt wird und in das noch offene Schlitzrohr (6) die Lichtwellenleiter (8) eingebracht werden, wobei in einer ersten aus Formrollen (24,25,26) bestehenden Formstufe (7) zunächst lediglich den Randbereichen (29,30) des Metallbandes (2) die Krümmung des herzustellenden Rohres (6) erteilt wird, das Schlitzrohr (6) längsnahtgeschweißt, und das geschweißte Rohr (10) durch eine an dem Rohr (10) hinter der Schweißstelle (9) angreifende Abzugsvorrichtung (13) durch die Fertigungsanlage transportiert wird, gekennzeichnet durch die Kombination folgender Merkmale:
   a) das Metallband (2) wird vor der Schweißstelle (9) regelbar angetrieben,
   b) das Rohr (10) gelangt unmittelbar hinter der Schweißstelle (9) mit mindestens 60 % seiner Umfangsfläche in einen mit Kühlmittel gefüllten Behälter (32).

2. Verfahren nach Anspruch 1, dadurch gekennzeichnet, daß das Band (2) während des Besäumens regelbar angetrieben wird.

3. Verfahren nach Anspruch 1 oder 2, dadurch gekennzeichnet, daß das Band (2) in der ersten Formstufe (7) regelbar angetrieben wird.

4. Verfahren nach Anspruch 1 oder 2, dadurch gekennzeichnet, daß das geschweißte Rohr (10) auf einen kleineren Durchmesser heruntergezogen wird.

5. Verfahren nach Anspruch 1 oder einem der folgenden, dadurch gekennzeichnet, daß die Bandkanten nach dem Besäumen angeschrägt werden.

6. Vorrichtung zur Durchführung des Verfahrens nach Anspruch 1 oder einem der folgenden, bestehend aus je einer Ablaufvorrichtung (1) für das Metallband (2) und die Lichtwellenleiter (8) einer Besäumungseinrichtung (4) für das Band (2), einer das Band (2) zum Rohr (6) formenden aus mehreren Formstufen (7) bestehenden Formeinrichtung (5), einer das Schlitzrohr (6) verschweißenden Schweißeinrichtung (9) sowie einer an dem geschweißten Rohr (10) angreifenden Abzugsvorrichtung (13), dadurch gekennzeichnet, daß die Besäumungseinrichtung (4) aus einer Rollenschere (15,16) besteht, wobei zumindest eine der Rollen (16) durch einen regelbaren Gleichstrommotor (23) angetrieben ist, daß zumindest die erste Formstufe (7) ein Rollenwerkzeug (24,25,26) ist, von denen zumindest eine der Rollen (24) durch einen regelbaren Gleichstrommotor (31) angetrieben ist und daß unmittelbar hinter der Schweißstelle (9) ein Kühlmittelbehälter (11,32) angeordnet ist, durch den das Rohr (10) hindurchführbar ist, wobei der Kühlmittelstand so eingestellt ist, daß das Kühlmittel das Rohr (10) um mindestens 60 % seines Umfangs umgibt.

7. Vorrichtung nach Anspruch 6, dadurch gekennzeichnet, daß der Kühlmittelbehälter (32) gegenüber dem Rohr höhenverstellbar ist.

8. Vorrichtung nach Anspruch 6 oder 7, dadurch gekennzeichnet, daß der Kühlmittelbehälter (32) einen Deckel aufweist und daß am Deckel ein Anschluß (37) für eine Saugpumpe angeordnet ist.

9. Vorrichtung nach Anspruch 6 oder einem der folgenden, dadurch gekennzeichnet, daß zwischen der Schweißstelle (9) und der Abzugsvorrichtung (13) vorzugsweise zwischen dem Kühlmittelbehälter (11,32) und der Abzugsvorrichtung (13) ein Ziehring (12) angeordnet ist.

10. Vorrichtung nach Anspruch 6 oder einem der folgenden, dadurch gekennzeichnet, daß die Schweißvorrichtung (9) eine WIG Schweißvorrichtung mit zwei oder mehr Elektroden (9a,9b,9c) ist.

## Claims

1. Method for producing an optical waveguide cable, in which a metal band (2), having a width of between 15 and 80 mm and a wall thickness of between 0.2 and 2.5 mm, the ratio of width to wall thickness being between 15 and 50, is continuously drawn from a supply reel (1), trimmed at its longitudinal edges and gradually shaped to form the slotted tube (6) and the optical waveguides (8) are inserted into the still open slotted tube (6), in which method, in a first shaping stage (7) consisting of shaping rollers (24, 25, 26), initially the curvature of the tube (6) to be fabricated is only imparted to the edge regions (29, 30) of the metal band (2), the slotted tube (6) is longitudinally seam welded and the welded tube (10) is transported through the fabrication plant by a drawing-off device (13) engaging the tube (10) behind the welding station (9), characterised by the combination of the following features:

   a) the metal band (2) is controllably driven in front of the welding station (9),

   b) immediately behind the welding station (9), the tube (10) passes with at least 60% of its circumferential area into a container (32) filled with coolant.

2. Method according to Claim 1, characterised in that the band (2) is controllably driven during the trimming.

3. Method according to Claim 1 or 2, characterised in that the band (2) is controllably driven in the first shaping stage (7).

4. Method according to Claim 1 or 2, characterised in that the welded tube (10) is drawn down to a smaller diameter.

5. Method according to Claim 1 or one of the subsequent claims, characterised in that the band edges are bevelled after the trimming.

6. Device for carrying out the method according to Claim 1 or one of the subsequent claims, consisting of one running-off device (1) for both the metal band (2) and the optical waveguides (8), a trimming device (4) for the band (2), a shaping device (5) consisting of several shaping stages (7) shaping the band (2) into the tube (6), a welding device (9) welding the slotted tube (6) and a drawing-off device (13) engaging the welded tube (10), characterised in that the trimming device (4) consists of rotating shears (15, 16), at least one of the rollers (16) being driven by a controllable direct-current motor (23), and that at least the first shaping stage (7) is a roller tool (24, 25, 26), at least one of the rollers (24) of which is driven by a controllable direct-current motor (31), and in that immediately behind the welding station (9) a coolant container (11, 32) is arranged through which the tube (10) can be passed, the coolant level being set in such a manner that the coolant surrounds the tube (10) for at least 60% of its circumference.

7. Device according to Claim 6, characterised in that the coolant container (32) can be adjusted in height with respect to the tube.

8. Device according to Claim 6 or 7, characterised in that the coolant container (32) exhibits a lid and that a connection (37) for a suction pump is arranged at the lid.

9. Device according to Claim 6 or one of the subsequent claims, characterised in that a drawing die (12) is arranged between the welding station (9) and the drawing-off device (13), preferably between the coolant container (11, 32) and the drawing-off device (13).

10. Device according to Claim 6 or one of the subsequent claims, characterised in that the welding device (9) is a TIG welding device having two or more electrodes (9a, 9b, 9c).

**Revendications**

1. Procédé de fabrication d'un câble à fibres optiques, dans lequel un ruban métallique (2) d'une largeur comprise entre 15 et 80 mm et d'une épaisseur de paroi comprise entre 0,2 et 2,5 mm, où le rapport de la largeur par l'épaisseur de paroi est compris entre 15 et 50, est déroulé de manière continue d'une bobine (1) de réserve, rogné et progressivement formé en tube fendu (6), et où les fibres optiques (8) sont introduites dans le tube fendu (6) encore ouvert, où dans un premier étage (7) de formation constitué de rouleaux (24, 25, 26) de façonnage, la courbure du tube (6) à fabriquer est appliquée aux extrémités (29, 30) du ruban métallique (2), le tube (6) fendu soudé en long, et le tube soudé (10) transporté à travers l'unité de fabrication par un dispositif (13) d'extraction situé en aval du poste de soudage (9), caractérisé par la combinaison des caractéristiques suivantes :
   a) le ruban métallique (2) est entraîné de manière réglable avant le poste de soudage (9),
   b) 60 % au moins du tube (10) traverse un réservoir (32) rempli d'un liquide réfrigérant disposé immédiatement derrière le poste (9) de soudage.

2. Procédé selon la revendication 1, caractérisé en ce que la bande (2) est entraînée de façon ajustable pendant l'opération de rognage.

3. Procédé selon la revendication 1 ou 2, caractérisé en ce que la bande (2) est entraînée de façon réglable dans le premier étage de formation (7).

4. Procédé selon la revendication 1 ou 2, caractérisé en ce que le diamètre du tube (10) est diminué par étirage.

5. Procédé selon la revendication 1 ou l'une des suivantes, caractérisé en ce que les arêtes de bande sont inclinées l'une vers l'autre après l'opération de rognage.

6. Dispositif pour la mise en oeuvre du procédé selon la revendication 1 ou l'une des suivantes, constitué d'un dispositif (1) de déroulage de la bande (2) métallique et des fibres optiques (8), d'un dispositif (4) de rognage de la bande (2), d'un dispositif (5) d'application de forme constitué de plusieurs étages (7) de formation d'un tube (6) à partir de la bande (2), d'un dispositif (9) de soudage du tube (6) fendu et d'un dispositif (13) de traction du tube (10) soudé, caractérisé en ce que le dispositif (4) de rognage est constitué par une cisaille (15, 16) à roulettes, où au moins une des roulettes (16) est entraînée par un moteur (23) à courant continu réglable, qu'au moins le premier étage (7) de formation est constitué par un dispositif (24, 25, 26) à rouleaux dont au moins un des rouleaux (24) est entraîné par un moteur à courant continu réglable et qu'un réservoir (11, 32) de liquide réfrigérant est installé immédiatement derrière la station (9) de soudage à travers lequel le tube (10) est entraînable, où le niveau de liquide réfrigérant est ajusté de telle sorte que le liquide réfrigérant entoure le tube (10) sur au moins 60 % de son périmètre.

7. Dispositif selon la revendication 6, caractérisé en ce que l'élévation du réservoir (32) de liquide réfrigérant par rapport au tube est ajustable.

8. Dispositif selon la revendication 6 ou 7, caractérisé en ce que le réservoir (32) de liquide réfrigérant comprend un couvercle et en ce qu'un raccordement (37) pour une pompe aspirante est disposé sur ce couvercle.

9. Dispositif selon la revendication 6 ou l'une des suivantes, caractérisé en ce qu'une filière (12) de tréfilage est disposée entre le poste (9) de soudage et le dispositif (13) de traction et préférentiellement entre le réservoir (12, 32) de liquide réfrigérant et le dispositif (13) de traction.

10. Dispositif selon la revendication 6 ou l'une des suivantes, caractérisé en ce que le dispositif (9) de soudage est un dispositif de soudage à l'arc TIG muni d'au moins deux électrodes (9a, 9b, 9c).

Fig. 1

Fig. 2

Fig. 3

Fig. 4

Fig. 5

Fig. 6

EP 0 313 896 B1